# EUROPEAN PATENT APPLICATION

(11) **EP 4 656 297 A1**
(43) Date of publication of application: **03.12.2025**
(21) Application number: 25175027.9
(22) Date of filing: 08.05.2025
(51) Int. Cl.: B05B 13/04, B05B 15/52, B41J 2/165, B41J 3/407, B05B 1/08, B05B 15/58

(54) **PAINTING SYSTEM**

(30) Priority: 30.05.2024 JP 2024087661
(71) Applicant: ABB SCHWEIZ AG, 5400 Baden (CH)
(72) Inventor: IIDA, Kisumi, Tokyo, 1416022 (JP); YAMAUCHI, Kuniharu, Tokyo, 1416022 (JP)
(74) Representative: Zimmermann & Partner Patentanwälte mbB

(57) **Abstract**

[Problem] The objective lies in providing a painting system which is capable of improving painting quality by wiping a nozzle-forming face at a suitable timing.

[Solution] A painting robot (10) of a painting system (1) comprises: a painting head unit (50) provided with a painting head (53) comprising a plurality of nozzles (54) for ejecting paint droplets; a robot arm (R1) which has the painting head unit (50) mounted on a tip end thereof and causes the painting head unit (50) to move to a desired position; and a control unit comprising a head control unit (90) for controlling operation of the painting head (53), and a robot arm control unit (70) for controlling operation of the robot arm (R1), a wiping means (300) is provided in order to wipe a nozzle-forming face (52), and the robot arm control unit (70) controls operation of the robot arm (R1) so that the nozzle-forming face (52) is wiped by the wiping means (300) at least before each vehicle is painted.

## Description

### [Technical Field]

The present invention relates to a painting system comprising a painting robot.

### [Background Art]

Robot painting employing robots has become the norm on painting lines for painting vehicles such as automobiles. For example, Patent Document 1 describes an exemplary configuration relating to robot painting, in which a nozzle ejection-face washing means is provided in order to wash the surface of a nozzle ejection face. Patent Document 1 describes a wiping device as this nozzle ejection-face washing means, the wiping device comprising a wiper member formed from a flexible material such as rubber, and using this wiper member to rub off paint, etc. adhering to the nozzle ejection face.

### [Prior Art Documents]

### [Patent Documents]

[Patent Document 1] WO 2021/028983 A1 (see paragraph 0139, etc.)

### [Summary of the Invention]

### [Problems to be Solved by the Invention]

The specific timing for wiping the nozzle-forming face is not described at all in the configuration disclosed in Patent Document 1. It may therefore not be possible to sufficiently gauge the improvement in painting quality.

The present invention has been devised in light of this situation, and the objective thereof lies in providing a painting system which is capable of improving painting quality by wiping a nozzle-forming face at a suitable timing.

### [Means for Solving the Problems]

In order to solve the problem above, a first aspect of the present invention provides a painting system comprising a painting robot for painting a painting area of a vehicle, characterized in that the painting robot comprises: a painting head unit provided with a painting head comprising a plurality of nozzles for ejecting paint droplets; a robot arm which has the painting head unit mounted on a tip end thereof and causes the painting head unit to move to a desired position; and a control unit comprising a head control unit for controlling operation of the painting head, and a robot arm control unit for controlling operation of the robot arm, a wiping means is provided in order to wipe a nozzle-forming face on which the nozzles open, and the robot arm control unit controls operation of the robot arm so that the nozzle-forming face is wiped by the wiping means at least before each vehicle is painted.

### [Effects of the Invention]

The present invention makes it possible to provide a painting system which is capable of improving painting quality by wiping a nozzle-forming face at a suitable timing.

### [Brief Description of the Drawings]

[Fig. 1] is a schematic configuration diagram showing the overall configuration of a painting robot according to an embodiment of the present invention.
[Fig. 2] shows a schematic configuration of a painting system comprising the painting robot shown in fig. 1.
[Fig. 3] shows a state in which a nozzle-forming face of a painting head unit of the painting robot shown in fig. 1, from which paint is ejected, is seen from a front face.
[Fig. 4] shows a schematic configuration for supplying paint to nozzles of the painting robot shown in fig. 1.
[Fig. 5] is a view in cross section showing a configuration of the painting robot shown in fig. 1 in the vicinity of a row-direction supply flow path, a nozzle pressurization chamber and a row-direction discharge flow path.
[Fig. 6] is a plan view showing the configuration of the nozzle-forming face of another painting head unit different from the painting head unit shown in fig. 3.
[Fig. 7] shows an image in which the nozzle-forming face is wiped by the wiping means before a vehicle is painted, according to the embodiment.
[Fig. 8] shows an image in which the nozzle-forming face is wiped by the wiping means after a vehicle has been painted, according to the embodiment.

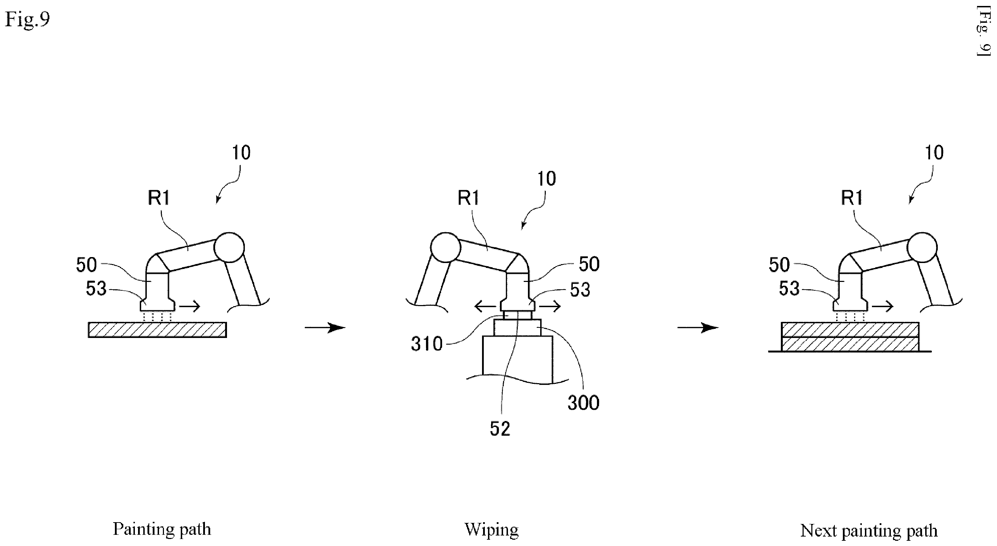

[Fig. 9] shows an image in which the nozzle-forming face is wiped by the wiping means between painting paths, according to the embodiment.
[Fig. 10] shows an image in which the nozzle-forming face is wiped by the wiping means during a transition to a different painting area of the vehicle, according to the embodiment.
[Fig. 11] shows an image in which the nozzle-forming face is wiped by the wiping means during a transition following completion of painting of a specific type to painting of a different type, according to the embodiment.
[Fig. 12] shows an image in which the nozzle-forming face is wiped by the wiping means after the painting head has been filled with paint, according to the embodiment.
[Fig. 13] shows an image in which the nozzle-forming face is wiped by the wiping means when the painting head has been inclined beyond a predetermined angle of inclination, according to the embodiment.

### [Embodiments of the Invention]

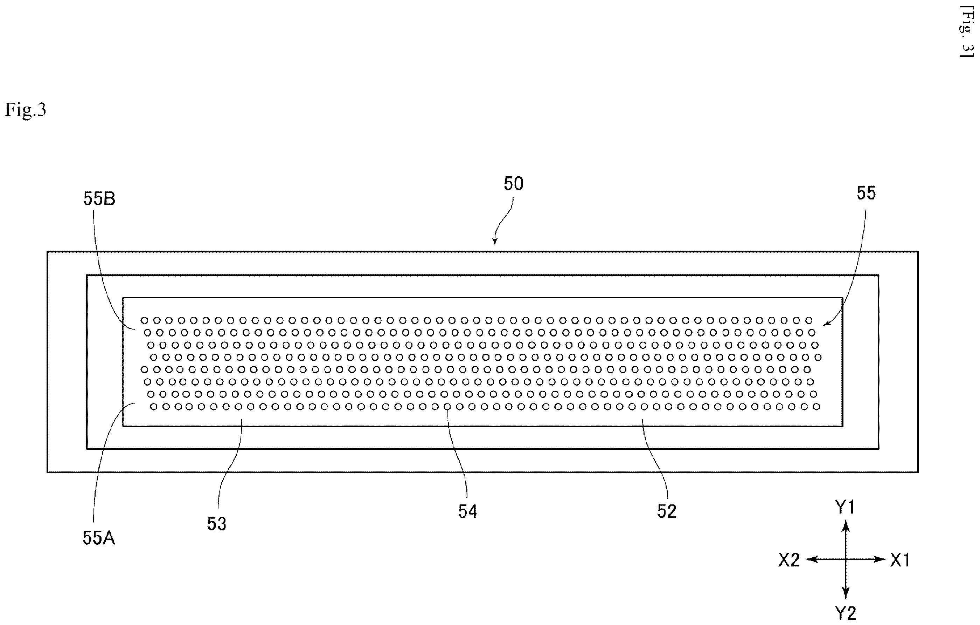

A painting system 1 and a painting robot 10 according to an embodiment of the present invention will be described below with reference to the drawings. It should be noted that in the following description, the X direction is a longitudinal direction of a nozzle-forming face 52 (painting head 53), the X1 side is the right-hand side of fig. 3, and the X2 side is the left-hand side of fig. 3, as required. Furthermore, the Y direction is a short-side direction (width direction) of the nozzle-forming face 52 (painting head 53), the Y1 side is the upper side of the page in fig. 3, and the Y2 side is the lower side of the page in fig. 3.

### (1. Outline of painting system 1 and painting robot 10)

The painting system 1 and painting robot 10 of this embodiment serve to perform "painting" of an object being painted, which is a vehicle or a vehicle part (a vehicle part constituting a portion of the vehicle will also be described as a vehicle below) positioned on a painting line in an automobile manufacturing plant, and the purpose of the painting system 1 and the painting robot 10 is to form a paint film on a surface of the object being painted in order to protect the surface and impart an attractive appearance. Vehicles moving along the painting line at predetermined time intervals therefore need to be painted with a desired painting quality in a fixed time.

Furthermore, the painting system 1 and painting robot 10 according to this embodiment are capable not only of forming the paint film, but also of forming various types of designs and images on the object being painted, namely a vehicle or a vehicle part. It should be noted that the object being painted is not limited to a vehicle or a vehicle part, provided that it is a component that needs painting, such as various types of components other than automotive components (e.g., external components for aircraft and railroads), etc.

### (1-1. Overall configuration of painting system 1 and painting robot 10)

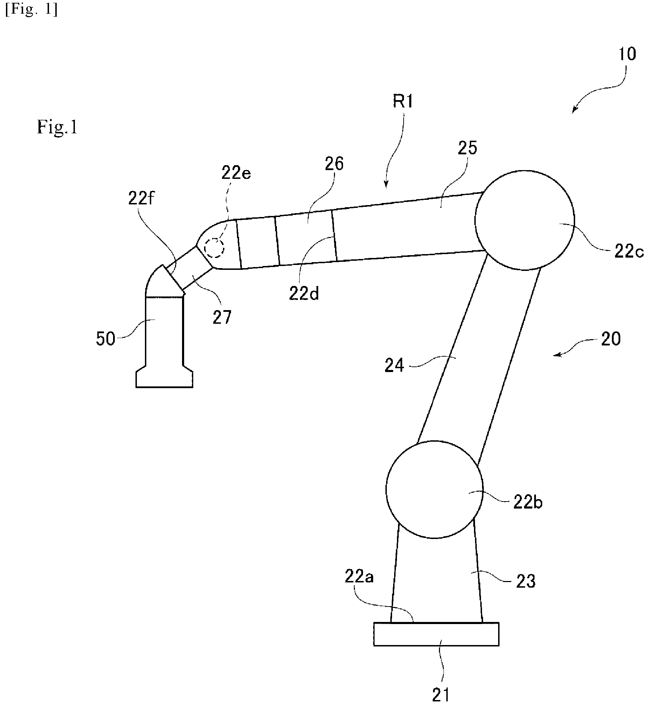

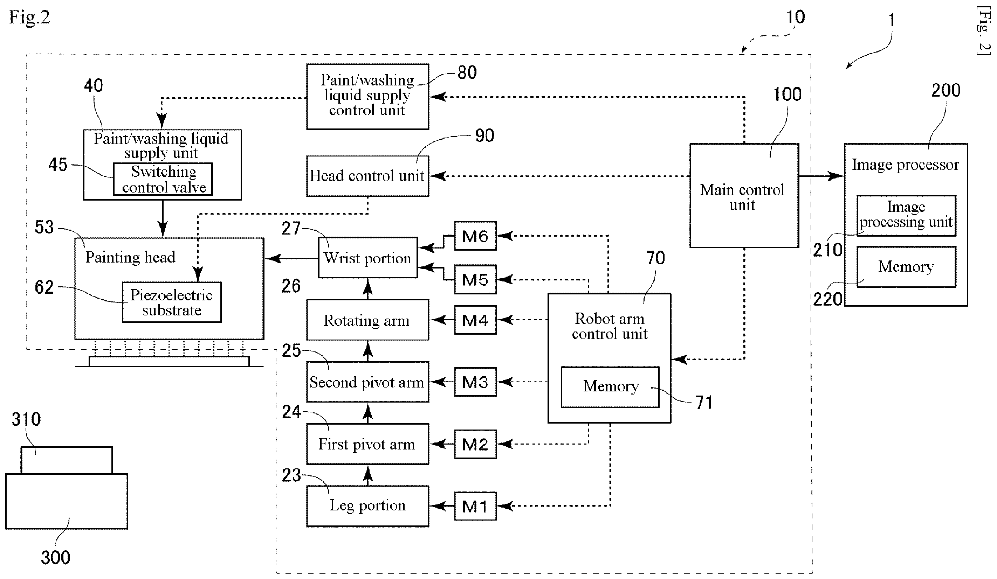

Fig. 1 is a schematic configuration diagram showing the overall configuration of the painting robot 10 according to an embodiment of the present invention. Fig. 2 shows a schematic configuration of the painting system 1 comprising the painting robot 10 shown in fig. 1. As shown in fig. 2, the painting system 1 comprises the painting robot 10, an image processor 200, and a wiping means 300.

### (1-2. Painting robot 10)

As shown in fig. 1, the painting robot 10 comprises a robot main body 20 and a painting head unit 50 as its main components. The painting robot 10 shown in fig. 1 is depicted as a 6-axis vertical articulated robot by way of example, but the painting robot 10 may be a robot of any type, such as a vertical articulated robot having a different number of axes to 6, a horizontal articulated robot, or an orthogonal robot.

### (1-3. Robot main body 20)

As shown in fig. 1, the robot main body 20 comprises, as its main components: a stand 21, first to sixth rotary shafts 22a-22f, a leg portion 23, a first pivot arm 24, a second pivot arm 25, a rotating arm 26, a wrist portion 27, and motors M1-M6 (see fig. 2) for driving the above components. It should be noted that the parts from the leg portion 23 to the wrist portion 27 correspond to a robot arm R1, but parts other than these such as the stand 21 may also correspond to the robot arm R1.

Among these, the stand 21 is a part which is installed at a point of installation such as a floor surface, but the stand 21 may equally be capable of travel in relation to the point of installation. Furthermore, the leg portion 23 is a part standing upright from the stand 21, and is provided so as to be rotatable in relation to the stand 21 via the first rotary shaft 22a by means of driving of the motor M1 (see fig. 2). Note that the leg portion 23 may equally be configured not to rotate in relation to the stand 21.

Furthermore, the first pivot arm 24 is provided at an upper end of the leg portion 23 so as to be pivotable via the second rotary shaft 22b by means of driving of the motor M2. The second pivot arm 25 is further provided on a tip end side of the first pivot arm 24 so as to be pivotable via the third rotary shaft 22c by means of driving of the motor M3.

The rotating arm 26 is furthermore provided on a tip end side of the second pivot arm 25 so as to be rotatable about the second pivot arm 25. The rotating arm 26 is rotatable via the fourth rotary shaft 22d by means of driving of the motor M4. The wrist portion 27 is furthermore provided on a tip end side of the rotating arm 26. The wrist portion 27 is capable of rotational movement about a shaft portion having a plurality of (such as two) different orientations, for example, by means of driving of the motor M5 and the motor M6. The rotary shafts enabling this rotational movement are the fifth rotary shaft 22e and the sixth rotary shaft 22f, respectively, in fig. 1. This enables the orientation of the painting head unit 50 to be controlled very accurately. Note that there may be any number of shaft portions provided that there are at least two.

Furthermore, the painting head unit 50 is mounted on the wrist portion 27, but the painting head unit 50 may also be detachably provided on the wrist portion 27.

### (1-4. Paint/washing liquid supply unit 40)

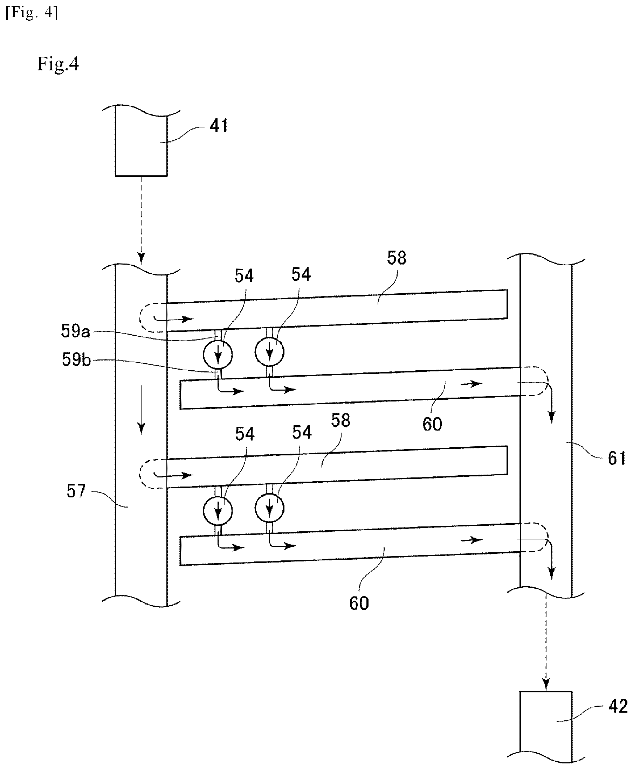

The painting system 1 and the painting robot 10 are provided with a paint/washing liquid supply unit 40, as shown in fig. 2. The paint/washing liquid supply unit 40 is a part for supplying paint or washing liquid toward the painting head unit 50. To this end, the paint/washing liquid supply unit 40 comprises: a supply line 41 (see fig. 4) for supplying the paint from a paint storage portion which is not depicted or for supplying the washing liquid from a washing liquid storage portion which is not depicted; a pump which is not depicted; valves, etc. which are not depicted; and a return flow path 42 for recovering paint which has not been ejected or dirty washing liquid.

Here, the paint/washing liquid supply unit 40 is provided with a switching control valve 45. The switching control valve 45 is a control valve for switching supply of paint from the paint storage portion which is not depicted and supply of washing liquid from the washing liquid storage portion which is not depicted, and is actuated by means of control by a paint/washing liquid supply control unit 80 which will be described later. Providing such a switching control valve 45 allows either paint or washing liquid to be selectively supplied by the paint/washing liquid supply unit 40.

It should be noted that when a configuration is adopted where the paint is supplied from outside the painting robot 10, the painting robot 10 need not comprise a part for storing the paint, and the part for storing the paint may be provided outside the painting robot 10.

### (1-5. Painting head unit)

The painting head unit 50 will be described next. Fig. 3 shows a state in which the nozzle-forming face 52 of the painting head unit 50, from which paint is ejected, is seen from a front face. As shown in fig. 3, the painting head unit 50 comprises a head cover (not depicted) and various components are built into the head cover. As shown in fig. 3, a plurality of nozzle rows 55 comprising nozzles 54 extending in a direction inclined in relation to a longitudinal direction of the painting head unit 50 are provided on the nozzle-forming face 52. In this embodiment, the nozzle rows 55 are provided with: first nozzle rows 55A which are present on one side (Y2 side) in a main scanning direction (Y direction); and second nozzle rows 55B which are present on another side (Y1 side) in the main scanning direction.

It should be noted that drive timing of the nozzles 54 is controlled when paint is ejected so that droplets ejected from nozzles 54 in the second nozzle rows 55B land between droplets ejected from adjacent nozzles 54 in the first nozzle rows 55A. This makes it possible to increase the density of dots during painting.

As shown in fig. 3, there is a single painting head 53 on the nozzle-forming face 52. However, a head group comprising multiple painting heads 53 may also be present on the nozzle-forming face 52. A configuration in which the plurality of painting heads 53 are aligned in a staggered arrangement may be cited as an example in this case, but the painting heads 53 in the head group need not have a staggered arrangement.

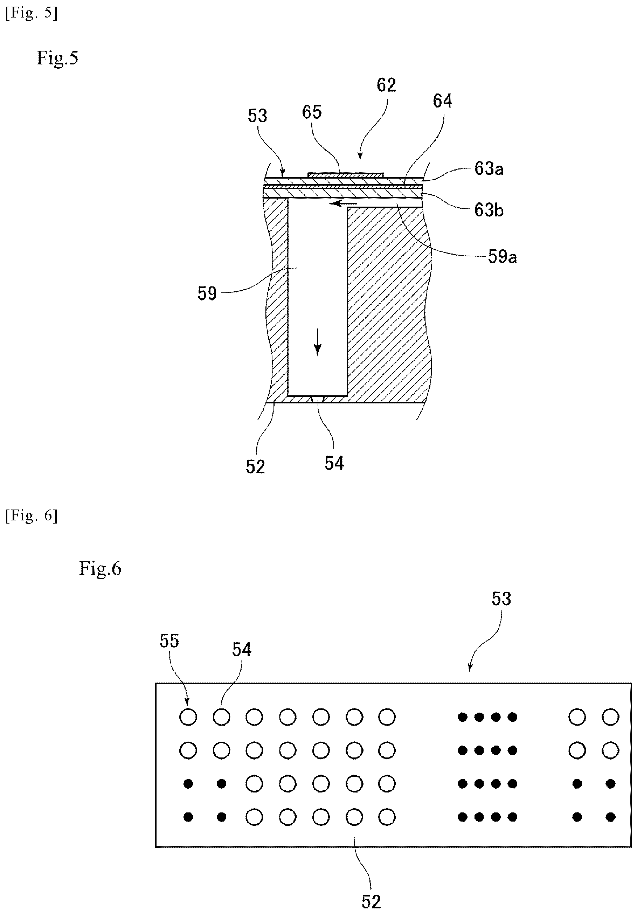

Fig. 4 shows a schematic configuration for supplying paint to the nozzles 54. Fig. 5 is a view in cross section showing a configuration in the vicinity of a row-direction supply flow path 58, a nozzle pressurization chamber 59 and a row-direction discharge flow path 60. As shown in fig. 4 and 5, the painting head 53 comprises: a supply-side large flow path 57, row-direction supply flow paths 58, nozzle pressurization chambers 59, row-direction discharge flow paths 60, and a discharge-side large flow path 61. The supply-side large flow path 57 is a flow path through which the paint is supplied from a supply path 41. Furthermore, the row-direction supply flow paths 58 are flow paths through which the paint inside the supply-side large flow path 57 is distributed.

Furthermore, the nozzle pressurization chambers 59 are connected to the row-direction supply flow paths 58 via nozzle supply flow paths 5 9 a . By this means, the paint is supplied from the row-direction supply flow paths 58 to the nozzle pressurization chambers 59. The nozzle pressurization chambers 59 are provided correspondingly with the number of nozzles 54, and the paint inside can be ejected from the nozzles 54 using a piezoelectric substrate 62 which will be described later.

Furthermore, the nozzle pressurization chambers 59 are connected to the row-direction discharge flow paths 60 via nozzle discharge flow paths 5 9 b . The paint ejected from the nozzles 54 is therefore discharged from inside the nozzle pressurization chambers 59 to the row-direction discharge flow paths 60 via the nozzle discharge flow paths 5 9 b . Furthermore, the row-direction discharge flow paths 60 are connected to the discharge-side large flow path 61. The discharge-side large flow path 61 is a flow path in which the paint discharged from each of the row-direction discharge flow paths 60 merges. The discharge-side large flow path 61 is connected to a return flow path 42.

By virtue of this configuration, the paint supplied from the supply path 41 is ejected from the nozzles 54 via the supply-side large flow path 57, the row-direction supply flow paths 58, the nozzle supply flow paths 5 9 a , and the nozzle pressurization chambers 59. Furthermore, the paint which has not been ejected from the nozzles 54 is returned from the nozzle pressurization chambers 59 to the return flow path 42 via the nozzle discharge flow paths 5 9 b , the row-direction discharge flow paths 60, and the discharge-side large flow path 61.

It should be noted that fig. 4 shows a configuration in which one row-direction discharge flow path 60 is arranged correspondingly with one row-direction supply flow path 58. However, it is also possible for multiple (e.g., two) row-direction discharge flow paths 60 to be arranged correspondingly with one row-direction supply flow path 58. Furthermore, it is equally possible for one row-direction discharge flow path 60 to be arranged correspondingly with multiple row-direction supply flow paths 58.

Furthermore, as shown in fig. 5, the piezoelectric substrate 62 is arranged on a top face (the face on the opposite side to the nozzle 54) of the nozzle pressurization chamber 59. The piezoelectric substrate 62 comprises two piezoelectric ceramic layers 63a, 63b constituting piezoelectric bodies, and further comprises a common electrode 64 and an individual electrode 65. The piezoelectric ceramic layers 63a, 63b are members capable of expanding and contracting when an external voltage is applied thereto. Ferroelectric ceramic materials such as lead zirconate titanate (PZT), NaNbO3, BaTiO3, (BiNa)NbO3, and BiNaNb5O15 may be used as the piezoelectric ceramic layers 63a, 63b.

Furthermore, as shown in fig. 5, the common electrode 64 is arranged between the piezoelectric ceramic layer 63a and the piezoelectric ceramic layer 63b. A common-electrode surface electrode (not depicted) is furthermore formed on an upper face of the piezoelectric substrate 62. The common electrode 64 and the common-electrode surface electrode are electrically connected through a via conductor (not depicted) present on the piezoelectric ceramic layer 63a. Furthermore, individual electrodes 65 are respectively arranged in locations facing the nozzle pressurization chambers 59. The part of the piezoelectric ceramic layer 63a between the common electrode 64 and the individual electrode 65 is polarized in a thickness direction. The piezoelectric ceramic layer 63a is therefore distorted under a piezoelectric effect when a voltage is applied to the individual electrode 65. When a predetermined drive signal is applied to the individual electrode 65, the piezoelectric ceramic layer 63b therefore undergoes a relative change so as to reduce the volume of the nozzle pressurization chamber 59, and paint is ejected as a result.

It should be noted that the common electrode 64 is arranged on the top face of the nozzle pressurization chamber 59 in fig. 5, but this does not mean that the configuration is limited to that shown in fig. 5 in which the common electrode 64 is arranged on the top face of the nozzle pressurization chamber 59. For example, it is possible to adopt a configuration in which the common electrode 64 is arranged on a side face (a face orthogonal or roughly orthogonal to the top face) of the nozzle pressurization chamber 59, or to adopt any other configuration provided that the paint can be properly ejected from the nozzles 54.

### (1-6. Other configuration of painting head unit)

Another configuration of the painting head unit 50 will be described next. Fig. 6 is a plan view showing the configuration of the nozzle-forming face 52 of another painting head unit 50. As shown in fig. 6, the nozzle rows 55 may be formed by arranging a plurality of nozzles 54 side-by-side along the short-side direction (width direction; Y direction) of the painting head 53. It should be noted that in the configuration shown in fig. 6, the nozzle rows 55 are formed by arranging the plurality of nozzles 54 side-by-side in the short-side direction (width direction; main scanning direction) of the painting head 53, but it is equally possible to adopt a configuration in which only one (a single) nozzle 54 is arranged in the short-side direction (width direction; main scanning direction) of the painting head 53. That is to say, a nozzle row 55 may consist of one nozzle 54.

Furthermore, when the vehicle is painted using a painting head 53 such as shown in fig. 6, painting may be performed in a state in which the longitudinal direction of the painting head 53 is slightly inclined in relation to the main scanning direction of the painting head 53. For example, since the nozzle rows 55 are inclined by a predetermined angle in relation to the main scanning direction in the configuration of the painting head 53 shown in fig. 3, the short-side direction of the painting head 53 shown in fig. 6 should be inclined by a predetermined angle in relation to the main scanning direction of the painting head 53. This inclination makes it possible to perform painting comparable with that of the painting head 53 shown in fig. 3 simply by adjusting the timing of ejecting paint from the nozzles 54.

### (1-7. Control configuration of painting system 1)

The control configuration for controlling operation of the painting system 1 will be described next. Note that the control configuration described below corresponds to the control unit. As shown in fig. 2, the painting robot 10 comprises: a robot arm control unit 70, a paint/washing liquid supply control unit 80, a head control unit 90, and a main control unit 100. Furthermore, the painting robot 10 is connected to the image processor 200 and further comprises the wiping means 300, to thereby construct the painting system 1.

Moreover, the robot arm control unit 70, paint/washing liquid supply control unit 80, head control unit 90, main control unit 100, and an image processing unit 210 which will be described later are configured from a central processing unit (CPU), a memory such as a storage area (read only memory (ROM) and random access memory (RAM), or non-volatile memory, etc.), and other components. Moreover, the image processing unit 210 may employ a graphics processing unit (GPU) instead of or as well as a CPU which has excellent image processing performance.

Furthermore, the painting robot 10 may also comprise various types of sensors which are not depicted, with output from these sensors being input to any of the robot arm control unit 70, paint/washing liquid supply control unit 80, head control unit 90, and main control unit 100. Examples of the various types of sensors which may be cited include an acceleration sensor, an angular velocity sensor, a position detection sensor for detecting the position of each drive unit, and an image sensor, etc., but other types of sensors may also be used.

Here, the robot arm control unit 70 is a part for controlling driving of the motors M1-M6. The robot arm control unit 70 comprises a memory 71 which stores programs and data created by robot teaching.

The robot arm control unit 70 controls driving of the motors M1-M6 on the basis of the programs and data stored in the memory 71, and image processing by the image processing unit 210 of the image processor 200. By means of this control, the painting head unit 50 can be made to pass, at a predetermined speed, through a desired position for performing painting, and to stop at a predetermined position. It should be noted that the memory 71 is provided in the painting robot 10, but the memory 71 may also be external to the painting robot 10, and information may be sent/received to/from this memory 71 via a wired or wireless communication means.

Furthermore, the paint/washing liquid supply control unit 80 is a part for controlling the supply of paint or washing liquid to the painting head unit 50, and specifically controls the operation of the pump and valves, etc. provided in the paint/washing liquid supply unit 40. Furthermore, the paint/washing liquid supply control unit 80 controls operation of the switching control valve 45 to achieve a state in which either paint or washing liquid is selectively supplied from the paint storage portion which is not depicted or from the washing liquid storage portion which is not depicted.

It should be noted that the paint/washing liquid supply control unit 80 preferably controls the operation of the pump and valves so that the paint or washing liquid is supplied at a constant pressure to the painting head unit 50 from which the paint or washing liquid is supplied. Note that the paint/washing liquid supply control unit 80 corresponds to a pressure control unit.

Furthermore, the head control unit 90 is a part for controlling operation of the piezoelectric substrate 62 inside the painting head unit 50 on the basis of image processing by the image processing unit 210.

Furthermore, the main control unit 100 is a part for sending predetermined control signals to the robot arm control unit 70, the paint/washing liquid supply control unit 80, and the head control unit 90 so that the motors M1-M6, the paint/washing liquid supply unit 40 and the piezoelectric substrate 62 collaborate to paint the object being painted.

Furthermore, the painting system 1 is provided with the image processor 200. The image processor 200 comprises the image processing unit 210 and a memory 220. The image processing unit 210 is a part for creating image data for each painting path constituting the pathway on which the painting head 53 performs painting.

Furthermore, the memory 220 is a part for storing the image data for each painting path correspondingly with a painting sequence.

It should be noted that a computer, for example, corresponds to the image processor 200, and this computer may be a component forming part of the painting robot 10 or may be provided separately from the painting robot 10. When the image processor 200 is provided separately from the painting robot 10, data is sent and received between the image processor 200 and the painting robot 10 by means of wired communication or wireless communication. It should be noted that even if the image processor 200 is provided separately from the painting robot 10, the image processor 200 may be included in the concept of the painting robot 10 or may not be included in the concept of the painting robot 10.

### (1-8. Wiping means 300)

The wiping means 300 will be described next. The wiping means 300 is provided outside the painting line on which vehicles are painted by means of the painting head 53 (that is, at a location where there is no interference with the location where the vehicles are painted). The wiping means 300 is a means for wiping the nozzle-forming face 52, and comprises wires and/or a sponge, etc.

The wiping means 300 comprises, for example, an elongate or planar wiping portion 310 for wiping the nozzle-forming face 52. Accordingly, when the nozzle-forming face 52 has been placed in contact with the wiping portion, the robot arm R1 is actuated to move the nozzle-forming face 52 so that the nozzle-forming face 52 can be wiped.

### (2. Action)

The action of the painting system 1 and painting robot 10 having the above configuration will be described below.

### (a) Wiping of nozzle-forming face 52 before vehicle C1 is painted

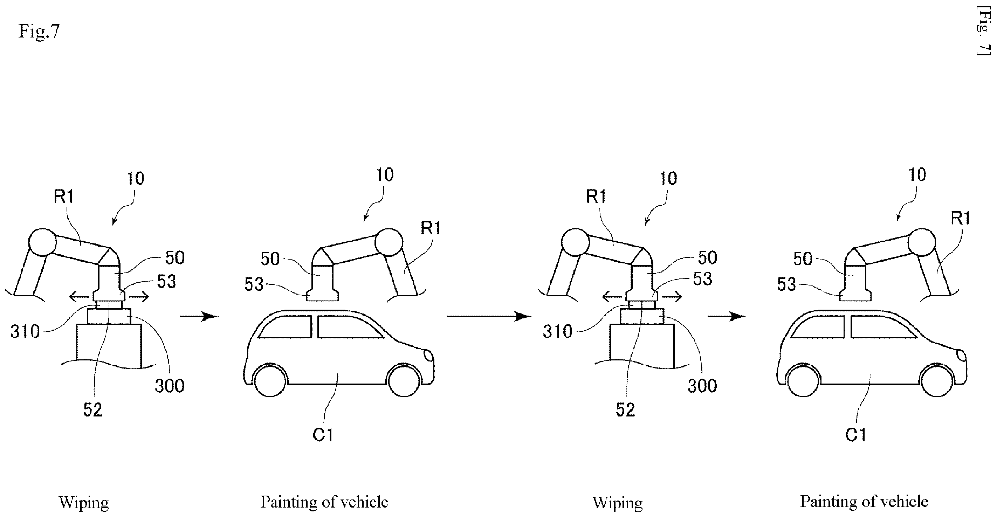

If droplets spilling from the openings of the nozzles 54 adhere to the nozzle-forming face 52 before the vehicle C1 (see fig. 7) is painted with a painting head 53 such as shown in fig. 5, there is a risk of droplets being ejected together with the adhered droplets when the droplets are ejected from the nozzles 54. In this case, there is a risk of a deterioration in painting quality because of varying sizes of droplets, and droplets landing in different positions from the intended landing positions. Furthermore, if droplets spilling from the nozzles 54 adhere around the openings of the nozzles 54, there is also a risk of obstructing ejection of droplets from the nozzles 54, making the droplets more difficult to eject.

In this embodiment, the nozzle-forming face 52 is therefore wiped by the wiping means 300 before each vehicle C1 is painted, as shown in fig. 7.

In order to wipe the nozzle-forming face 52 in this way, the robot arm control unit 70 actuates the robot arm R1 by means of a command from the main control unit 100, and moves the painting head 53 to outside the painting line on which painting is performed. The nozzle-forming face 52 is then pressed against the wiping portion 310 of the wiping means 300 which is provided outside the painting line, and the nozzle-forming face 52 is moved while still pressed against the wiping portion 410. The nozzle-forming face 52 is wiped by the wiping means 300 (wiping portion 310) as a result.

The wiping performed by the wiping means 300 removes the paint which has adhered to the nozzle-forming face 52, before the vehicle C1 is painted. This therefore prevents droplets from being ejected together with paint adhering to the nozzle-forming face 52 when the droplets are ejected from the nozzles 54 in order to paint the vehicle C1. This makes it possible to improve the quality of painting of the vehicle C1.

It should be noted that in the following description also, the robot arm control unit 70 actuates the robot arm R1 by means of a command from the main control unit 100 in order to press the nozzle-forming face 52 against the wiping portion 310 of the wiping means 300, and the nozzle-forming face 52 is moved while still pressed against the wiping portion 310, in the same way as described above. The nozzle-forming face 52 is wiped by the wiping means 300 (wiping portion 310) as a result.

### (b) Wiping of nozzle-forming face 52 after vehicle C1 has been painted

When the nozzle-forming face 52 is wiped before the vehicle C1 is painted, more than a certain amount of time may pass before the subsequent vehicle C1 is painted. There is a risk of droplets adhering to the nozzle-forming face 52 drying and solidifying when such a time has passed. In this case, there is a risk that solid material resulting from solidified droplets will not be removed even if the nozzle-forming face 52 is wiped by the wiping means 300 before the subsequent vehicle C1 is painted.

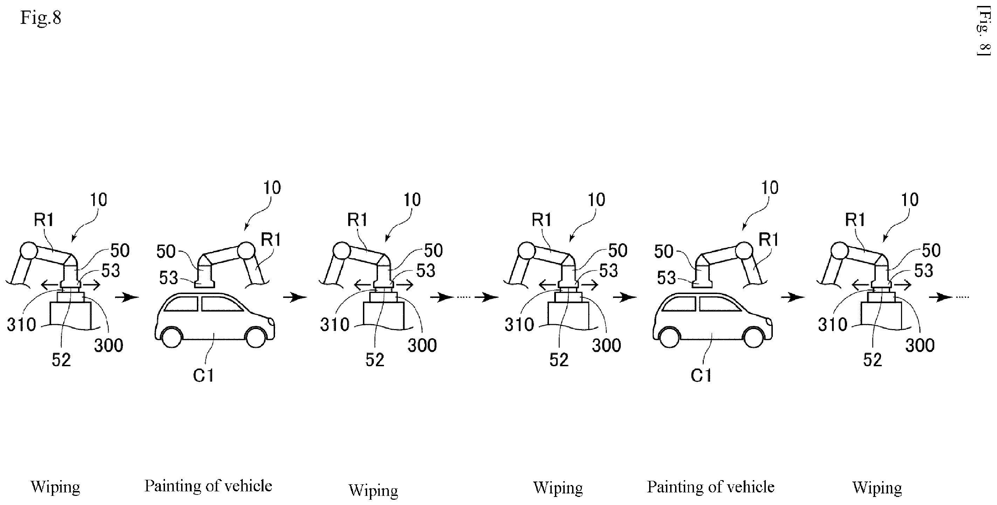

The nozzle-forming face 52 may therefore be wiped by the wiping means 300 after painting of the vehicle C1 has been completed, as shown in fig. 8. However, if the time from completion of painting of a given vehicle C1 until the start of painting of the subsequent vehicle C1 is not especially long, it is possible to dispense with wiping of the nozzle-forming face 52 by the wiping means 300 after the vehicle C1 has been painted. Furthermore, if the time from completion of painting of a given vehicle C1 until the start of painting of the subsequent vehicle C1 is longer than the time indicated above, wiping may be performed periodically by the wiping means 300 in order to prevent drying on the nozzle-forming face 52.

### (c) Wiping of nozzle-forming face 52 between painting paths

Furthermore, when the vehicle C1 is painted on multiple painting paths, the nozzle-forming face 52 may be wiped by the wiping means 300 during the transition from completion of painting on one painting path to the next painting path. In this case, when painting is performed in only a single direction of the reciprocating movement of the painting head 53, the nozzle-forming face 52 is preferably wiped by the wiping means 300 each time painting is completed on each painting path.

However, when the nozzle-forming face 52 is wiped by the wiping means each time painting is completed on a painting path, there is a risk of time being required until completion of painting of one vehicle C1. If a plurality of painting paths are assumed to form one painting path section, the nozzle-forming face 52 may therefore be wiped by the wiping means 300 each time painting of that painting path section is completed.

Furthermore, when painting is performed in both directions of the reciprocating movement of the painting head 53, the nozzle-forming face 52 may also be wiped by the wiping means 300 each time painting is completed on each of the outward painting path and the return painting path.

However, when the nozzle-forming face 52 is wiped by the wiping means each time painting is completed on the outward painting path and the return painting path, there is a risk of time being required until completion of painting of one vehicle C1. If the outward and return painting paths are assumed to form one painting path section, the nozzle-forming face 52 may therefore be wiped by the wiping means 300 each time painting of that painting path section is completed. Furthermore, if a plurality of painting paths are assumed to form one painting path section, regardless of the outward painting path and the return painting path, the nozzle-forming face 52 may be wiped by the wiping means 300 each time painting of that painting path section ends.

### (d) Wiping of nozzle-forming face 52 when painting transitions to a different area of vehicle C1

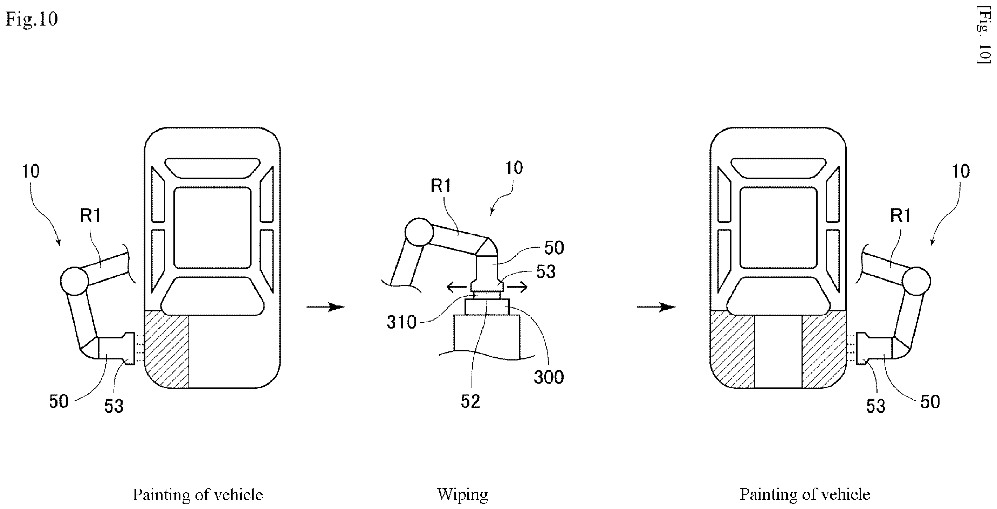

Furthermore, the nozzle-forming face 52 may be wiped by the wiping means 300 during a transition following completion of painting of a specific painting area to painting of a different painting area using the same paint, as shown in fig. 10. This might be a case in which the right-hand side of the vehicle C1 is painted, after which the nozzle-forming face 52 is wiped by the wiping means 300, and the left-hand side of the vehicle C1 is then painted after the wiping. Furthermore, this might also be a case in which the nozzle-forming face 52 is wiped by the wiping means 300 between painting of the front side and painting of the rear side of the vehicle C1. However, this is not limiting provided that the wiping takes place during the transition to painting of a different painting area.

### (e) Wiping of nozzle-forming face 52 during a transition following completion of painting of a specific type to painting of a different type

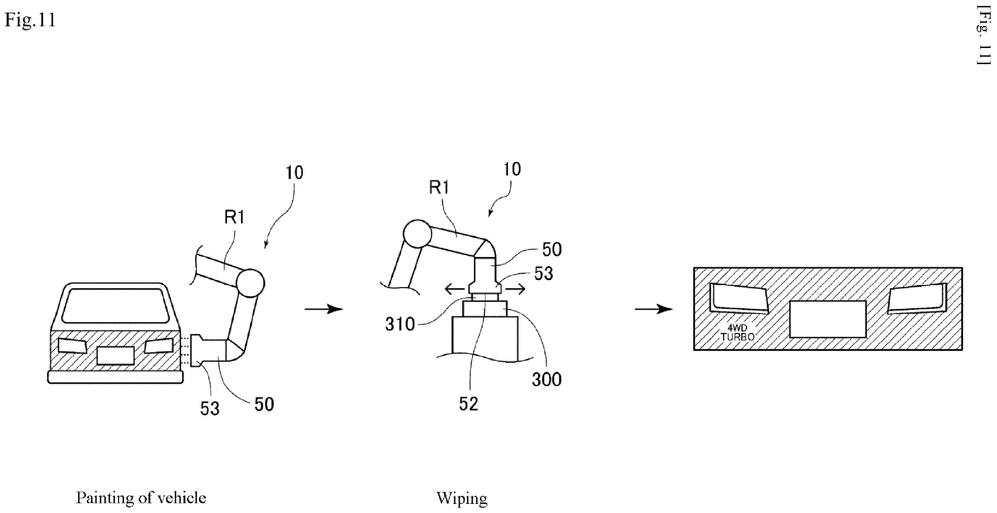

Furthermore, the nozzle-forming face 52 may be wiped by the wiping means 300 during a transition following completion of painting of a specific type to painting of a different type, as shown in fig. 11. For example, this might be a case in which an area such as the roof or bonnet is covered with paint, after which high-resolution painting (printing) such as text, a logo or a brand is performed, with the nozzle-forming face 52 being wiped by the wiping means 300 before the high-resolution painting (printing). There is no limitation to this case, however.

It should be noted that fig. 11 shows a state in which painting of the rear part of the vehicle C1 is completed, after which text (a logo) designed with "4WD TURBO" is printed on.

### (f) Wiping of nozzle-forming face 52 after the painting head 53 has been filled with paint

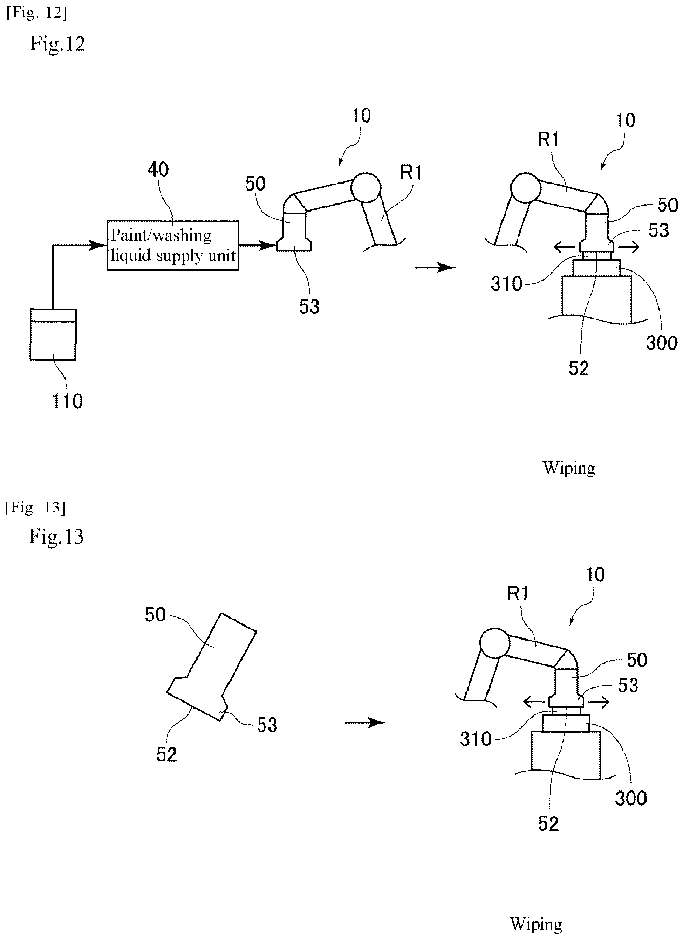

Furthermore, when the painting head 53 has been filled with paint, the paint often spills from the nozzles 54 so that paint droplets adhere to the nozzle-forming face 52. Therefore, as shown in fig. 12, the nozzle-forming face 52 may be wiped by the wiping means 300 when the main control unit 100 has determined that the painting head 53 is filled with paint. It should be noted that the left-hand side of fig. 12 also shows this in conjunction with an image in which paint is supplied to the painting head 53 from a paint tank 110 by the paint/washing liquid supply unit 40.

### (g) Wiping of nozzle-forming face 52 when painting head 53 is inclined beyond a predetermined angle

Furthermore, when the angle of inclination of the painting head 53 increases, there is a risk of paint being ejected from the nozzles 54 due to a water head pressure difference. Therefore, as shown in fig. 13, the nozzle-forming face 52 may be wiped by the wiping means 300 when the painting head 53 has been inclined beyond a predetermined angle.

In particular, a difference in elevation inside the painting head 53 increases when the painting head 53 is inclined in the longitudinal direction (the X direction in fig. 3), and the nozzle-forming face 52 is therefore preferably wiped by the wiping means 300 when the angle of inclination of the painting head 53 in the longitudinal direction has exceeded a predetermined angle. However, the nozzle-forming face 52 may also be wiped by the wiping means when the angle of inclination of the painting head 53 in the short-side direction (the Y direction) has exceeded a predetermined angle.

### (h) Wiping of nozzle-forming face 52 based on supply pressure of paint to painting head 53

A paint recovery pressure needs to be set higher than a supply pressure at which the paint is supplied to the painting head 53, depending on the type of paint used for the painting. In such a case, air is very likely to be drawn in from the nozzles 54, and air bubbles will readily be formed. With paints of this type, it is therefore preferable for the droplet ejection control for causing the paint to be ejected from the nozzles 54 to be performed before the surface of the nozzle-forming face 52 is wiped, and for the nozzle-forming face 52 to be wiped by the wiping means 300 (wiping portion 310) after this.

### (3. Additional notes)

Details of the disclosure of the embodiment described above will be understood as follows, for example.
[1] Specifically, a painting system 1 comprises a painting robot 10 for painting a painting area of a vehicle, the painting robot 10 comprising: a painting head unit 50 provided with a painting head 53 comprising a plurality of nozzles 54 for ejecting paint droplets; a robot arm R1 which has the painting head unit 50 mounted on a tip end thereof and causes the painting head unit 50 to move to a desired position; a head control unit 90 for controlling operation of the painting head 53, and a robot arm control unit 70 for controlling operation of the robot arm R1, a wiping means 300 is provided in order to wipe a nozzle-forming face 52 on which the nozzles 54 open, and the robot arm control unit 70 controls operation of the robot arm R1 so that the nozzle-forming face 52 is wiped by the wiping means 300 at least before each vehicle C1 is painted.

An operation to wipe the nozzle-forming face 52 by means of the wiping means 300 is thus performed at least before each vehicle C1 is painted. Even if droplets spill from and adhere to the nozzle-forming face 52, the droplets adhering to the nozzle-forming face 52 can therefore be removed. It is therefore possible to prevent droplets from being ejected together with droplets adhering to the nozzle-forming face 52, and the painting quality of the vehicle C1 can therefore be improved.

[2] Furthermore, in accordance with the embodiment above and in addition to the details disclosed in [1] above, the robot arm control unit 70 preferably controls operation of the robot arm R1 so that the nozzle-forming face 52 is wiped by the wiping means 300 after each vehicle C1 is painted.

When this configuration is adopted, the wiping means 300 can advantageously remove droplets adhering to the nozzle-forming face 52 due to wiping back during painting of the vehicle C1, and droplets spilling onto the nozzle-forming face 52 during painting.

[3] Furthermore, in accordance with the embodiment above and in addition to [1] and [2] above or details disclosed in a combination thereof, the robot arm control unit 70 preferably controls operation of the robot arm R1 so that the nozzle-forming face 52 is wiped by the wiping means 300 during a transition from completion of painting on a specific painting path to a subsequent painting path, among a plurality of painting paths for painting the vehicle C1.

By means of such control, the wiping means 300 can advantageously remove droplets adhering to the nozzle-forming face 52 when painting is performed on a specific painting path. It is therefore possible to prevent droplets from being ejected together with droplets adhering to the nozzle-forming face 52 during painting on the subsequent painting path, and the painting quality can therefore be improved.

[4] Furthermore, in accordance with the embodiment above and in addition to the details disclosed in any of [1] to [3] above or a combination thereof, the robot arm control unit 70 preferably controls operation of the robot arm R1 so that the nozzle-forming face 52 is wiped by the wiping means 300 during a transition following completion of painting of a specific painting area to a different painting area using the same paint, or during a transition following completion of painting of a specific type to painting of a different type.

Droplets adhering to the nozzle-forming face 52 can thus be advantageously wiped by the wiping means 300 during a transition following completion of painting of a specific painting area to painting of a different painting area using the same paint.

Furthermore, droplets adhering to the nozzle-forming face 52 can be advantageously wiped by the wiping means 300 during a transition following completion of painting of a specific type to painting of a different type.

[5] Furthermore, in accordance with the embodiment above and in addition to the details disclosed in any of [1] to [4] above or a combination thereof, when the main control unit 100 determines that the painting head 53 is filled with the paint,the robot arm control unit 70 preferably controls operation of the robot arm R1 so that the nozzle-forming face 52 is wiped by the wiping means 300.

The nozzle-forming face 52 is thus wiped by the wiping means 300 after the painting head 53 has been filled with paint, whereby droplets adhering to the nozzle-forming face 52 can be advantageously removed by the wiping means 300. It is therefore possible to prevent a situation from arising where paint dries during the time until the vehicle C1 is actually painted, and the paint is not sufficiently wiped away by the wiping prior to painting.

[6] Furthermore, in accordance with the embodiment above and in addition to the details disclosed in any of [1] to [5] above or a combination thereof, when the robot arm control unit 70 has inclined the painting head 53 beyond a predetermined angle, the robot arm control unit 70 preferably controls operation of the robot arm R1 so that the nozzle-forming face 52 is wiped by the wiping means 300.

If droplets are ejected from the nozzles 54 due to a water head pressure difference when the robot arm control unit 70 has inclined the painting head 53 beyond a predetermined angle, the droplets adhering to the nozzle-forming face 52 can thus be advantageously removed by the wiping means 300. It is therefore possible to prevent a situation from arising where paint dries during the time until the vehicle C1 is actually painted, and the paint is not sufficiently wiped away by the wiping prior to painting.

### (4. Variant examples)

An embodiment of the present invention was described above, but the present invention may be modified in various ways in addition to this embodiment. Variant examples will be described below.

The embodiment above employs an inkjet system in which the painting head 53 ejects the droplets from the nozzles 54 by using the piezoelectric substrate 62. However, the painting head is not limited to an inkjet system, and a dispenser system may equally be used.

### [Key to Symbols]

1... Painting system, 10... Painting robot, 20... Robot main body, 21... Stand, 22a... First rotary shaft, 22b... Second rotary shaft, 22c... Third rotary shaft, 22d... Fourth rotary shaft, 22e... Fifth rotary shaft, 22f... Sixth rotary shaft, 23... Leg portion, 24... First pivot arm, 25... Second pivot arm, 26... Rotating arm, 27... Wrist portion, 40... Paint/washing liquid supply unit, 41... Supply line, 42... Return flow path, 45... Switching control valve, 50... Painting head unit, 52... Nozzle-forming face, 53... Painting head, 54... Nozzle, 55... Nozzle row, 55A... First nozzle row, 55B... Second nozzle row, 57... Supply-side large flow path, 58... Row-direction supply flow path, 59... Nozzle pressurization chamber, 59a... Nozzle supply flow path, 59b... Nozzle discharge flow path, 60... Row-direction discharge flow path, 61... Discharge-side large flow path, 62... Piezoelectric substrate, 63a... Piezoelectric ceramic layer, 63b... Piezoelectric ceramic layer, 64... Common electrode, 65... Individual electrode, 70... Robot arm control unit, 71... Memory, 80... Paint/washing liquid supply control unit (corresponding to pressure control unit), 90... Head control unit, 100... Main control unit, 110... Paint tank, 200... Image processor, 210... Image processing unit, 220... Memory, 300... wiping means, 310... Wiping portion

## Claims

1. Painting system comprising a painting robot for painting a painting area of a vehicle, **characterized in that** the painting robot comprises:
a painting head unit provided with a painting head comprising a plurality of nozzles for ejecting paint droplets;
a robot arm which has the painting head unit mounted on a tip end thereof and causes the painting head unit to move to a desired position; and
a control unit comprising a head control unit for controlling operation of the painting head, and a robot arm control unit for controlling operation of the robot arm,
wherein a wiping means is provided in order to wipe a nozzle-forming face on which the nozzles open, and
the robot arm control unit controls operation of the robot arm so that the nozzle-forming face is wiped by the wiping means at least before each vehicle is painted.

2. Painting system according to claim 1, **characterized in that**
the robot arm control unit
controls operation of the robot arm so that the nozzle-forming face is wiped by the wiping means after each vehicle is painted.

3. Painting system according to claim 1 or 2, **characterized in that**
the robot arm control unit controls operation of the robot arm so that the nozzle-forming face is wiped by the wiping means during a transition from completion of painting on a specific painting path to a subsequent painting path, among a plurality of painting paths for painting the vehicle.

4. Painting system according to any of claims 1, 2 or 3, **characterized in that**
the robot arm control unit controls operation of the robot arm so that the nozzle-forming face is wiped by the wiping means during a transition following completion of painting of a specific painting area to a different painting area using the same paint, or during a transition following completion of painting of a specific type to painting of a different type.

5. Painting system according to any of claims 1 to 4, **characterized in that**
when the control unit determines that the painting head is filled with the paint,
the robot arm control unit controls operation of the robot arm so that the nozzle-forming face is wiped by the wiping means.

6. Painting system according to any of claims 1 to 5, **characterized in that**
when the robot arm control unit has inclined the painting head beyond a predetermined angle, the robot arm control unit controls operation of the robot arm so that the nozzle-forming face is wiped by the wiping means.
